Europäisches Patentamt

European Patent Office

Office européen des brevets

(11) Publication number: **0 160 212**
**B1**

(12) **EUROPEAN PATENT SPECIFICATION**

(45) Date of publication of patent specification: **13.04.88**

(51) Int. Cl.⁴: **F 16 C 27/06, B 60 K 17/24**

(21) Application number: **85103582.4**

(22) Date of filing: **12.02.82**

(60) Publication number of the earlier application in accordance with Art. 76 EPC: **0 058 544**

(54) **Improvements in or relating to resilient mountings.**

(30) Priority: **14.02.81 GB 8104679**

(43) Date of publication of application:
**06.11.85 Bulletin 85/45**

(45) Publication of the grant of the patent:
**13.04.88 Bulletin 88/15**

(84) Designated Contracting States:
**DE FR IT SE**

(56) References cited:
**DE-C- 889 268**
**DE-C- 920 046**
**US-A-2 933 354**
**US-A-3 140 901**
**US-A-3 961 829**

(73) Proprietor: **DUNLOP LIMITED**
**Silvertown House Vincent Square**
**London SW1P 2PL (GB)**

(72) Inventor: **Moore, Alan Frederick**
**15 Catherines Close**
**Burbage Leicestershire (GB)**

(74) Representative: **Moore, John Hamilton et al**
**Dunlop Limited Group Patent Department P.O.**
**Box 504**
**Erdington Birmingham B24 9QH (GB)**

Courier Press, Leamington Spa, England.

## Description

This invention concerns improvements in or relating to a method of manufacture of resilient mountings and in particular, though not exclusively, resilient mountings for supporting the ball race of a divided propeller shaft of a motor vehicle. Such mountings are commonly referred to as centre bearings.

The present invention relates in particular to a method of manufacture of resilient mountings of the kind comprising an outer rigid member formed with an aperture in which is situated an inner rigid member, and wherein said inner and outer rigid members are radially spaced relative to one another by first and second axially spaced resilient annular load bearing diaphragms arranged one either side of a plane which includes the centre of the mounting and which extends transverse to the longitudinal axis of the mounting. Such a mounting is disclosed for example in US—A—3140901.

The invention provides that use shall be made of an outer rigid member of a kind which comprises two annular elements which are independent from one another during moulding of the mounting thereby to allow use of a reusable mould core to form the chamber within the mounting, the annular elements being axially separable to release the mould core and allow the core to be removed radially whereupon the elements may be subsequently joined together e.g. by bolting, rivetting or mechanical interlock etc. The mould core may be split into two or more segments to facilitate removal.

Preferably each diaphragm is provided at a respective one end of the mounting and is of substantially C-shape in axial cross-section whereby relative radial movement between the inner and outer members is accommodated by bending of the diaphragms in the apex regions. Preferably the apex regions of the diaphragms extend in opposite directions, preferably axially outwards of the mounting so as to project beyond the ends of the inner and outer members.

Preferably a resilient buffer is positioned in the chamber to restrict radial movement between the members beyond a predetermined magnitude. Preferably the buffer is associated with one of the members and projects radially towards the other member leaving a gap therebetween in the static load condition. Preferably the buffer comprises an annular ring which may be continuous or segmental in the circumferential direction thereof.

The ring may be of any suitable cross-section but is preferably of generally triangular axial cross-section having the apex directed towards said other member.

Preferably means is provided to reduced friction between contacting surfaces of the ring and said other member when the mounting is subjected to radial loads beyond said predetermined magnitude. Such means may comprise a coating of low friction material on one or both of the contacting surfaces or at least one abutment of low friction material secured to the ring or said other member. By low friction material is meant a material having a coefficient of friction less than 0.3.

In a preferred construction confronting inner and outer surfaces of the outer and inner members are cylindrical and the diaphragms comprise the end portions of an annular hollow cylindrical bush the inner and outer centre portions of which are attached to the inner and outer rigid members respectively and the buffer member is integral with one of the centre portions.

The mounting may be moulded such that the longitudinal axes of the inner and outer members are radially off-set when the mounting is in an unloaded condition. Preferably the extent of the off-set is selected such that when a static load is applied to the inner rigid member e.g. due to the weight of a divided propeller shaft supported by the inner rigid member, the inner member adopts a desired resultant position, either co-axial or off-set relative to the outer member.

In use of the mounting to support the divided propeller shaft of a motor vehicle the outer member may be rigidly attached to the vehicle body whereby radial and axial deflection of the shaft relative to the vehicle body is accommodated by deformation of the diaphragms. Alternatively where the assembly is required to have a high radial stiffness and a low axial stiffness the mounting is preferably adapted for pivotal movement with respect to the vehicle body about an axis transverse to the cylindrical axis of the mounting whereby the radial stiffness of the assembly is determined by the radial stiffness of the diaphragms and the axial stiffness of the assembly is determined by the torsional stiffness of the pivot arrangement, i.e. the radial stiffness of the diaphragms may be selected to provide any required radial load capability without affecting the overall axial deflection capabilities of the assembly.

The invention will now be described in more detail, by way of example only, with reference to the accompanying drawings wherein:

Figure 1 is an end view of a mounting in accordance with the present invention;

Figure 2 is a side view of the mounting shown in Figure 1;

Figure 3 is a section, to an enlarged scale, on the line 3—3 of Figure 1;

Figure 4 is a side view of the mounting shown in Figures 1 to 3 as moulded;

Figure 5 is an end view of an installation incorporating the mounting shown in Figures 1 to 3;

Figure 6 is a side view of the installation shown in Figure 5, and

Figure 7 is a side view similar to Figure 6 showing the installation in an axially deflected position.

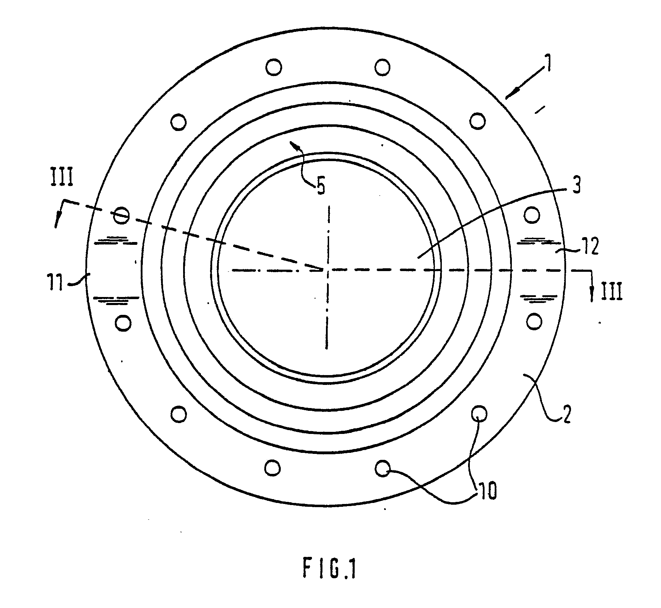

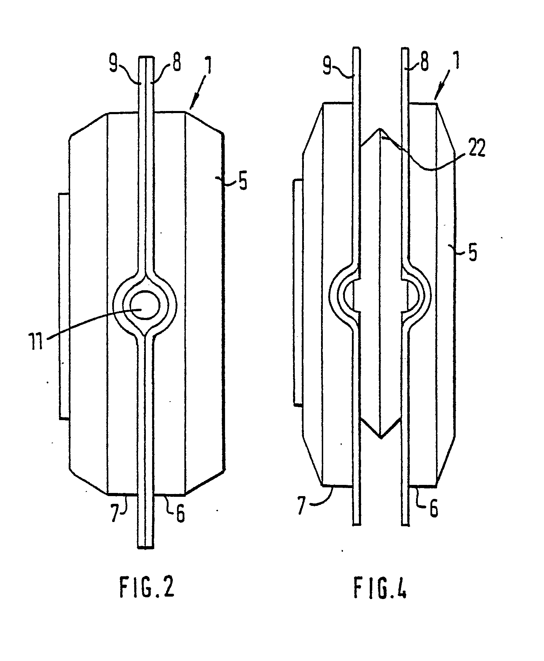

The mounting 1 shown in Figures 1 to 3 of the accompanying drawings comprises an outer rigid member 2 formed with a cylindrical aperture 3 in which is situated an inner rigid member 4, the outer and inner members being radially spaced apart by a resilient bush 5 acting between the members 2, 4.

The outer member 2 is formed by two annular metal rings 6, 7 which define the aperture 3. Each ring 6, 7 has a radially outwardly directed flange 8, 9 respectively at one end and the flanges 8, 9 are secured together by a plurality of circumferentially spaced rivets 10. The flanges 8, 9 are deformed at diametrically opposed positions to form two location holes 11, 12 for a purpose to be described in more detail below.

The inner member 4 comprises an annular cylindrical metal tube 13 the axial length of which is slightly less than the axial length of the outer member 2. One end of the tube 13 is radiused to form a radially inwardly directed flange 14 and the tube is contained within the axial extent of the aperture 3.

The bush 5 comprises an annular cylindrical hollow rubber body 15 having inner and outer tubular centre portions 16 and 17 in which the inner and outer members 4 and 2 are embedded respectively and end portions defining respective annular diaphragms 18, 19 extending between opposed end portions of the inner and outer members 2, 4 and arranged symmetrically with respect to a transverse plane P including the centre of the mounting. In addition one end of the bush 5 is provided at the radially inner periphery thereof with a tubular extension 20 which in use of the mounting acts as a dirt seal.

Each diaphragm 18, 19 is of substantially C-shape in axial cross-section having the apex thereof directed axially outwards of the mounting, whereby the diaphragms are deformable in the radial direction by bending about the apices.

One or both of the diaphragms is slotted to allow circulation of a cooling fluid e.g. air through a chamber 21 defined by the hollow body 15.

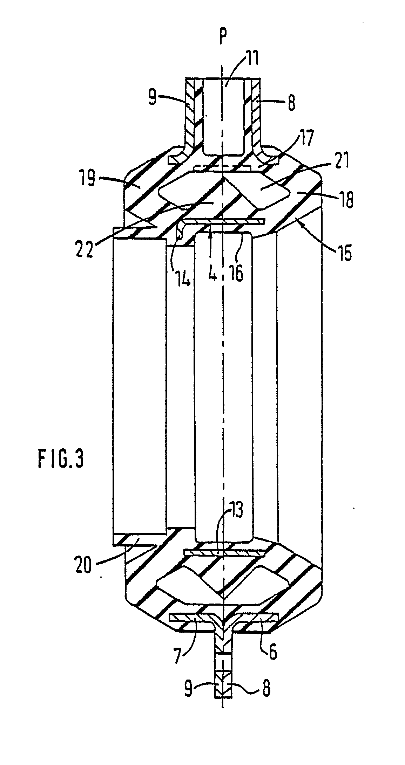

In the chamber 21 there is positioned an annular buffer ring 22 of triangular cross-section integral with inner centre portion 16 of the body 15. The apex of ring 22 projects radially outwards towards the outer centre portion 17 of the body 15 and is spaced therefrom in the unloaded condition of the mounting. The ring 22 serves to limit relative radial movement between the inner and outer members 4, 2 under radial loads beyond a predetermined magnitude. An insert of low friction material e.g. nylon may be provided on the contacting surface of the centre portion 17 as shown in dotted lines in Figure 3 to reduce friction between contacting surfaces of the ring 22 and the centre portion 17 of the body 15.

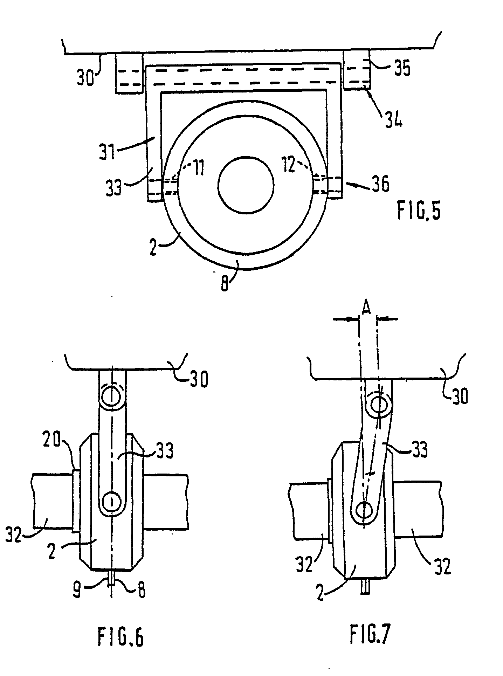

The above-described mounting may be moulded integrally in one piece using a reusable core to form the chamber 21 by moulding the mounting with the rings 6, 7 initially unconnected thereby enabling the core to be released by axially moving the rings 6, 7 apart as shown in Figure 4 and removing the core radially, the rings 6, 7 being subsequently brought together again and the flanges 8, 9 rivetted together.

The above-described mounting is suitable for mounting the ball race of a vehicle split propeller shaft to a vehicle body and one such installation is shown in Figures 5 to 7 in which the outer member 2 is secured to the vehicle body 30 by means of a U-shaped link 31 and the inner member 4 receives the ball race of the split shaft 32. As shown each limb 33 of the link 31 is pivotally connected at one end to the vehicle body by respective pivot means 34 including a mounting bracket 35 for attachment to the vehicle body and at the other free end to the outer member 2 by respective pivot means 36 received in the locating holes 11, 12 defined by the flanges 8, 9. Each pivot means 34, 36 comprises a rubber bush pivot and the torsional stiffness of the pivot may be varied by altering the characteristics of the bush.

In use relative radial movement between the shaft and the vehicle body under radial loads up to a predetermined magnitude is accommodated by radial deformation of the diaphragms 18, 19 whereupon the ring 22 contacts the outer centre portion 17 of the body 15 and further radial movement is buffered by compression of the ring 22. Axial displacement A of the shaft relative to the vehicle body is accommodated by pivotal movement of the link 31 relative to the mounting and the vehicle body.

The symmetrical arrangement of the diaphragms 18, 19 to either side of a transverse plane through the centre of the mounting prevents induced conical movement being produced as a result of relative radial movement between the shaft and the vehicle body under radial loads while the pivot arrangement allows for variation in the axial position of the mounting on initial installation as well as providing the required axial flexibility in operation.

The external surface of the outer tubular member may be of any desired cross-section and the outer member may be located in a complementary opening in a housing mounted for pivotal movement with respect to the vehicle body. The outer tubular member may be adapted for either pivotal mounting as above described or fixed mounting with respect to a component to which it is secured in use so that both radial and axial deflection are controlled by the diaphragms.

The resilient buffer may be integral with the outer centre portion of the bush and, if required, the inner centre portion provided with an insert made of a material having a low coefficient of friction. The resilient buffer may be made from the same or a different elastomer to that forming the remainder of the bush depending on the required characteristics of the buffer. In certain applications the buffer may be omitted altogether. A respective tubular extension may be provided at each end of the bush to seal both ends of the mounting with respect to a component received within the inner member.

Reference is made to European Application No. 82300727.3, published as EP—A—58544, from which the present application is divided.

## Claims

1. A method of manufacturing a resilient mounting comprising an outer rigid member (2) formed with an aperture (3) in which is situated an inner rigid member (4) radially spaced relative to the outer rigid member by first and second axially spaced resilient annular load bearing diaphragms (18, 19) arranged one on either side of a plane (P) including the centre of the mounting and extending transverse to the longitudinal axis of the mounting characterised in that said method comprises providing a mould core locatable within a mould member, providing a pair of rigid annular elements (6, 7) for comprising said outer rigid member (2), moulding mouldable material with the aid of said mould core to form a one-piece moulded assembly of said first and second annular load bearing diaphragms (18, 19) the radially inner regions of which are interconnected and the radially outer regions of which have moulded therewith a respective annular element (6, 7), removing the mould core from the moulded assembly and securing together said annular elements (6, 7) comprising said outer rigid member (2).

2. A method according to claim 1 characterised in that each of said annular elements (6, 7) is formed with a flange (8, 9) and said elements are secured one to another by said flanges.

3. A method according to claim 2 characterised in that each of said flanges (8, 9) is arranged as a radially outwardly directed portion of an annular metal ring.

4. A method according to claim 2 or claim 3 characterised in that said flanges are deformed at diametrically opposed positions to form two location holes (11, 12).

5. A method according to any one of the preceding claims characterised in that the diaphragms (18, 19) are moulded to comprise the end portions of an annular hollow tubular bush (15) the inner and outer centre portions (16, 17) of which are attached to the inner and outer members (4, 2) respectively.

6. A method according to any one of the preceding claims wherein the inner rigid member (4) is moulded integrally with the load bearing diaphragms (18, 19).

## Patentansprüche

1. Verfahren zum Herstellen einer elastischen Halterung mit einem äußeren starren Element (2), das mit einer Öffnung (3) ausgebildet ist, in der sich ein inneres starres Element (4) radial im Abstand relativ zum äußeren starren Element über eine erste und eine zweite axial beabstandete elastische und ringförmige Lastaufnahmemembran (18, 19) befindet, die auf beiden Seiten einer Ebene (P) angeordnet sind, in der der Mittelpunkt der Halterung liegt und die quer zur Längsachse der Halterung verläuft, dadurch gekennzeichnet, daß das Verfahren die Schaffung eines Formkerns, der in einem Formelement angeordnet werden kann, die Schaffung eines Paares von starren Ringelementen (6, 7) zur Bildung des äußeren starren Elementes (2), das Formen eines formbaren Materials mit Hilfe des Formkernes, um eine einteilige geformte Anordnung der ersten und zweiten ringförmigen Lastaufnahmemembran (18, 19) zu bilden, deren radial innen liegende Bereiche miteinander verbunden sind und an deren radial außen liegende Bereiche ein jeweiliges Ringelement (6, 7) angeformt ist, die Entfernung des Formkerns von der geformten Anordnung und die Befestigung der Ringelemente (6, 7) aneinander, die das äußere starre Element (2) bilden, umfaßt.

2. Verfahren nach Anspruch 1, dadurch gekennzeichnet, daß jedes der Ringelemente (6, 7) mit einem Flansch (8, 9) ausgebildet wird und diese Elemente durch diese Flansche aneinander befestigt werden.

3. Verfahren nach Anspruch 2, dadurch gekennzeichnet, daß jeder der Flansche (8, 9) als radial nach außen gerichteter Teil eines ringförmigen Metallringes angeordnet wird.

4. Verfahren nach Anspruch 2 oder 3, dadurch gekennzeichnet, daß die Flansche an diametral gegenüberliegenden Teilen verformt werden, um zwei Aufnahmlöcher (11, 12) zu bilden.

5. Verfahren nach einem der vorhergehenden Ansprüche, dadurch gekennzeichnet, daß die Membranen (18, 19) so geformt werden, daß sie die Endabschnitte einer ringförmigen Hohlrohrbuchse (15) umfassen, deren innerer und äußerer Mittelteil (16, 17) an dem inneren und äußeren Element (4, 2) jeweils angebracht werden.

6. Verfahren nach einem der vorhergehenden Ansprüche, bei dem das innere starre Element (4) in einem Stück mit den Lastaufnahmemembranen (18, 19) geformt wird.

## Revendications

1. Un procédé de fabrication d'un support élastique comprenant un élément rigide extérieur (2) pourvu d'un trou (3) dans lequel est placé un élément rigide intérieur (4) espacé radialement de l'élément rigide extérieur par des premier et second diaphragmes annulaires de support de charge (18, 19), élastiques, axialement espacés et disposés de part et d'autre d'un plan (P) passant par le centre du support et orientés transversalement à l'axe longitudinal du support, caractérisé en ce que ledit procédé consiste à réaliser un noyau de moule pouvant être placé à l'intérieur d'un élément de moulage, à réaliser deux organes annulaires rigides (6, 7) pour former ledit élément rigide extérieur (2), à mouler une matière moulable, à l'aide dudit noyau de moule, pour former un ensemble moulé monobloc desdits premier et second diaphragmes annulaires de support de charge (18, 19), dont les zones radialement intérieures sont reliées ensemble et dont les zones radialement extérieures sont pourvues au moulage d'un organe annulaire respectif (6, 7), à enlever le noyau de moule de l'ensemble moulé et à fixer lesdits organes annulaires (6, 7) constituant ledit élément rigide extérieur (2).

2. Un procédé selon la revendication 1, caractérisé en ce que chacun desdits organes annulaires (6, 7) est pourvu d'un rebord (8, 9) et lesdits organes sont fixés l'un avec l'autre par lesdits rebords.

3. Un procédé selon la revendication 2, caractérisé en ce que chacun desdits rebords (8, 9) est agencé sous la forme d'une partie, dirigée radialement vers l'extérieur, d'une pièce annulaire métallique.

4. Un procédé selon la revendication 2 ou la revendication 3, caractérisé en ce que lesdits rebords sont déformés dans des positions diamétralement opposées afin de créer deux trous de positionnement (11, 12).

5. Un procédé selon une quelconque des revendications précédentes, caractérisé en ce que les diaphragmes (18, 19) sont moulés de façon à constituer les parties extrêmes d'un manchon tubulaire creux annulaire (15) dont les parties centrales intérieure et extérieure (16, 17) sont fixées respectivement sur les éléments intérieur et extérieur (4, 2).

6. Un procédé selon une quelconque des revendications précédentes, caractérisé en ce que l'élément rigide intérieur (4) est moulé unitairement avec des diaphragmes de support de charge (18, 19).

FIG.1

FIG.2

FIG.4

FIG.3

FIG.5

FIG.6

FIG.7